Europäisches Patentamt

European Patent Office

Office européen des brevets

(19)

(11) EP 0 817 735 B1

(12) **EUROPÄISCHE PATENTSCHRIFT**

(45) Veröffentlichungstag und Bekanntmachung des Hinweises auf die Patenterteilung:
**25.08.1999 Patentblatt 1999/34**

(21) Anmeldenummer: 96909108.1

(22) Anmeldetag: 21.03.1996

(51) Int. Cl.$^6$: **B60T 8/00**

(86) Internationale Anmeldenummer:
**PCT/EP96/01233**

(87) Internationale Veröffentlichungsnummer:
**WO 96/31373 (10.10.1996 Gazette 1996/45)**

(54) **VERFAHREN UND SCHALTUNGSANORDNUNG ZUR DÄMPFUNG VON SCHWINGUNGEN IM ANTRIEBSSYSTEM EINES FAHRZEUGS**

PROCESS AND CIRCUIT FOR DAMPING VIBRATIONS IN A VEHICLE DRIVE SYSTEM

PROCEDE ET CIRCUIT POUR L'AMORTISSEMENT DE VIBRATIONS DANS LE SYSTEME D'ENTRAINEMENT D'UN VEHICULE

(84) Benannte Vertragsstaaten:
**DE FR GB**

(30) Priorität: **05.04.1995 DE 19512623**

(43) Veröffentlichungstag der Anmeldung:
**14.01.1998 Patentblatt 1998/03**

(73) Patentinhaber:
**Continental Teves AG & Co. oHG
60488 Frankfurt (DE)**

(72) Erfinder:
• **KOLBE, Alexander
D-64846 Gross-Zimmern (DE)**

• **HONUS, Klaus
D-60439 Frankfurt am Main (DE)**

(56) Entgegenhaltungen:
| | |
|---|---|
| EP-A- 0 262 602 | EP-A- 0 329 071 |
| EP-A- 0 363 515 | EP-A- 0 416 100 |
| WO-A-90/06250 | DE-A- 4 433 729 |
| GB-A- 2 289 097 | US-A- 4 759 590 |
| US-A- 5 511 867 | |

• PATENT ABSTRACTS OF JAPAN vol. 018, no. 245 (M-1603), 11.Mai 1994 & JP,A,06 032222 (NALDEC KK;OTHERS: 01), 8.Februar 1994,

**Beschreibung**

Die Erfindung bezieht sich auf ein Verfahren zur Dämpfung von Schwingungen im Antriebssystem eines mit einer Regelung, insbesondere einer Blockierschutz-, Antriebsschlupf- und/oder Fahrstabilitätsregelung, ausgerüsteten Fahrzeugs, bei dem das Drehverhalten der einzelnen Räder ermittelt und ausgewertet wird und bei dem Mittel zum Erkennen und Dämpfen von Rad- und Achsschwingungen vorgesehen sind. Schaltungsanordnungen zur Durchführung des Verfahrens gehören ebenfalls zur Erfindung.

Im Antriebssystem eines Kraftfahrzeuges können durch Elastizitäten in den Antriebssträngen Schwingungen entstehen, die sich als Drehschwingungen der Räder in Umfangsrichtung, insbesondere der angetriebenen Räder, auswirken. Diese Schwingungen sind in Abhängigkeit von ihrer Amplitude und auch ihrer Frequenz im Fahrzeug spürbar und beeinträchtigen den Fahrkomfort. Durch Regelungssysteme, die auf Bremsdruckmodulation beruhen, insbesondere durch Antriebsschlupfregelungen und elektronische Differentialsperren, können solche Schwingungen noch verstärkt werden.

Aus der WO 90/06250 ist bereits ein Antiblokkierregelsystem bekannt, bei dem das Auftreten von Schwingungen durch Analyse der Regelzyklen während eines Blockierschutzregelungsvorgangs festgestellt werden soll. Hierzu werden die Zeitdauern der aufeinanderfolgenden Regelzyklen miteinander verglichen. Bei Übereinstimmung der Zeitdauern zweier aufeinanderfolgenden Regelzyklen, zuzüglich einer Toleranz, wird auf einen Sonderbetrieb umgeschaltet. Weichen die Zeitdauern der aufeinanderfolgenden Zyklen voneinander ab wird wieder in den Normalbetrieb zurückgeschaltet. Außerhalb einer Blockierschutzregelung geschieht nichts.

Ferner ist in der nicht vorveröffentlichten GB-A-2 289 097 ein Antiblockiersystem mit steuerbaren Bremsdruckregelventilen beschrieben, bei dem zur Schwingungsdämpfung den eigentlichen Ventilbetätigungssignalen eine schwingungsabhängige Komponente überlagert wird. Diese Komponente wird mit Hilfe eines am Differential des Fahrzeugs angeordneten Drehzahlsensors und von Filterschaltungen gewonnen. Es wird ein schwingungsabhängiges Signal gebildet und mit einem Schwellwert verglichen. Hierzu wird die Drehgeschwindigkeit des Antriebsmotors zur Radgeschwindigkeit in Bezug gesetzt, wobei die Änderung des Drehmomentes, das auf den Antriebsstrang wirkt, aus der Differenz zwischen der Motor-Drehgeschwindigkeit und der Drehgeschwindigkeit am Differential bestimmt und die Betätigungszeiten der Bremsdruckregelvorrichtung durch das Drehmoment derart beeinflußt werden sollen, daß die Antriebsstrangschwingungen abnehmen.

Der Erfindung liegt nun die Aufgabe zugrunde, solchen Schwingungen entgegenzuwirken und die Schwingungen zumindest so weit zu dämpfen, daß sie vom Fahrer und von den anderen Insassen des Fahrzeugs nicht mehr wahrgenommen und zumindest nicht mehr als unangenehm empfunden werden.

Es hat sich gezeigt, daß diese Aufgabe mit dem im Anspruch 1 beschriebenen Verfahren gelöst werden kann. Die Besonderheit dieses Verfahrens besteht darin, daß durch Auswerten des Drehverhaltens der einzelnen Räder und der Drehschwingungen in Umfangsrichtung der Räder die Schwingungen im Antriebssystem ermittelt werden und daß sodann diese Schwingungen durch Einsteuern von Bremsdruck oder durch Modulation des Bremsdruckes, der zur Schlupfregelung in die Bremsen der einzelnen Räder eingesteuert wird, in Abhängigkeit von der Amplitude und der Phasenlage der Drehschwingungen gedämpft werden.

Erfindungsgemäß wird also mit Hilfe der ohnehin vorhandenen, zu den im Fahrzeug installierten Regelungssystemen gehörenden Bauteile und somit ohne Mehraufwand - abgesehen von der Erweiterung der Regelelektronik oder des Regelungsprogrammes - eine wirkungsvolle Dämpfung der Schwingungen und damit eine Komforterhöhung sowie in vielen Fällen auch eine Verbesserung der Regelung erreicht.

Nach einem Ausführungsbeispiel beschränkt sich die Erfindung auf eine "passive" Schwingungsdämpfung, die dadurch zustande kommt, daß das Einsetzen einer von der Schlupfregelung abhängigen Druckeinsteuerung in die Radbremsen des jeweiligen Rades bis zum Beginn der nächsten ansteigenden Halbwelle der Drehschwingung verzögert wird. In gleicher Weise kann bei Bedarf auch das Einsetzen des Druckabbaus bis zum Beginn der nächsten fallenden Halbwelle der Drehschwingung verzögert werden. Handelt es sich um ein Regelungssystem, bei dem die Bremsdruckmodulation durch Druckaufbau- und Druckabbaupulse erfolgt, wird zur Schwingungsdämpfung der Beginn dieser Druckaufbau- und der Druckabbaupulse jeweils bis zum Einsetzen der nächsten ansteigenden bzw. fallenden Halbwelle hinausgeschoben.

Eine solche passive Schwingungsdämpfung versagt, wenn solche Drehschwingungen während einer Druckkonstanthaltephase störend in Erscheinung treten. In diesem Fall wird erfindungsgemäß eine "aktive" Schwingungsdämpfung unabhängig von der durch das Schlupfregelungssystem errechneten Bremsdruckmodulation durchgeführt, wobei am Anfang einer steigenden Halbwelle der Drehschwingungen Bremsdruck in die Radbremse des jeweiligen Rades eingesteuert und in entsprechender Weise am Anfang einer fallenden Halbwelle Bremsdruck abgebaut wird. Dabei wird zweckmäßigerweise der Bremsdruck jeweils um denjenigen Betrag erniedrigt, um den er zuvor erhöht wurde.

Besonders vorteilhafte Schaltunganordnungen zur passiven und aktiven Schwingungsdämpfung sowie spezielle Ausführungsbeispiele dieser Schaltungsanordnung sind ebenfalls in den beigefügten Ansprüchen beschrieben. Danach werden eine von der Schlupfregelung abhängige erste Solldruck-Komponente und außerdem eine zur passiven oder aktiven Dämpfung der Drehschwingungen dienende, von einer Schwingungsdämpfungslogik erzeugte zweite Solldruck-Komponente getrennt ermittelt, überlagert und als Sollwert des Bremsdrucks einer Ventilansteuerung, die die Signale zur Ansteuerung der Hydraulikventile liefert, zugeführt. Zur passiven Schwingungsdämpfung kann es genügen, wenn die Schwingungsdämpfungslogik ein Ausgangssignal liefert, das ein Halten der zuletzt ermittelten ersten Solldruck-Komponenten oder ein weiterleiten der aktuellen ersten Solldruck-Komponente hervorruft.

Die Ventilsteuerung kann wiederum einen (untergeordneten) Regelkreis enthalten, der den durch Überlagerung der beiden Sollwert-Komponenten ermittelten Sollwert des Bremsdruckes mit dem Istwert des Bremsdruckes vergleicht, die Differenz zwischen dem Sollwert und dem Istwert des Bremsdruckes oder einem angenäherten Istwert bestimmt und die Signale zur Ansteuerung der Hydraulikventile in Abhängigkeit von dieser Bremsdruckdifferenz erzeugt. Der dem Istwert des Bremsdruckes in den einzelnen Radbremsen angenäherte Druck wird zweckmäßigerweise durch Bildung eines Raddruckmodells bestimmt.

Die in den Ansprüchen beschriebenen Schaltungsanordnungen, die zur Ausführung des erfindungsgemäßen Verfahrens dienen, können durch eine festverdrahtete Logik oder auch mit Hilfe von entsprechend Programmierten Microcomputer, Microrontroller oder dergl. verwirkiicht werden.

Weitere Merkmale, Vorteile und Anwendungsmöglichkeiten der Erfindung gehen aus der folgenden Beschreibung von Ausführungsbeispielen anhand der beigefügten Abbildungen hervor.

Es zeigen

Fig. 1  im Blockschaltbild eine Schaltungsanordnung nach der Erfindung mit ausschließlich passiver Schwingungsdämpfung

Fig. 2  in gleicher Darstellungsweise wie Fig. 1 eine Schaltungsanordnung mit passiver und aktiver Schwingungsdämpfung,

Fig. 3  im Diagramm den Verlauf der Radgeschwindigkeit und des Radbremsdruckes bei einer passiven Schwingungsdämpfung und

Fig. 4  in gleicher Darstellungsweise wie Fig. 3 den Verlauf der Radgeschwindigkeit und des Radbremsdruckes bei einer aktiven Schwingungsdämpfung.

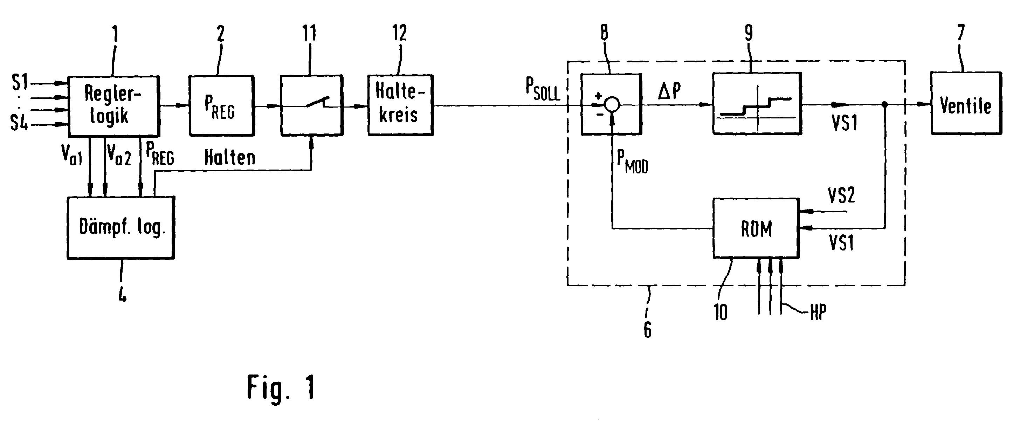

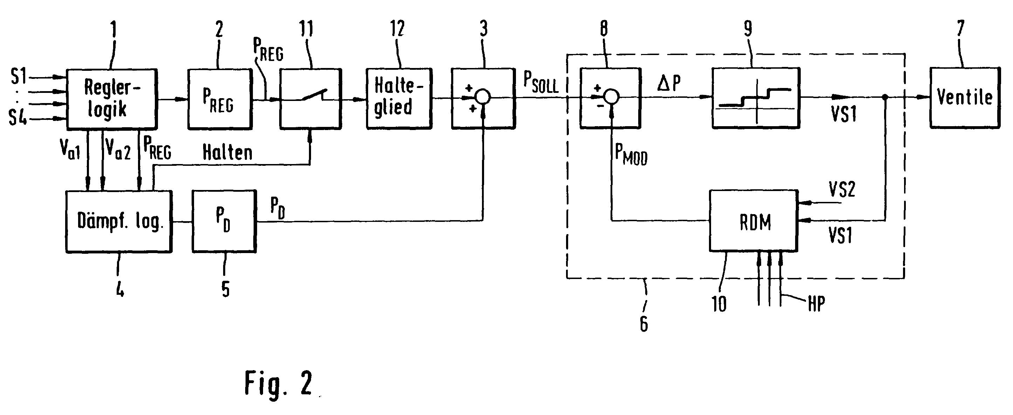

Fig.1 und 2 dienen zur Veranschaulichung des grundsätzlichen Aufbaus einer Schaltungsanordnung nach der Erfindung und zur Erläuterung der prinzipiellen Wirkungsweise des erfindungsgemäßen Verfahrens. Es handelt sich in diesem Beispiel um eine Schaltungsanordnung für eine Bremsanlage mit elektronischer Blockierschutz- und Antriebsschlupfregelung. Die mit Hilfe von Radsensoren S1 - S4 gewonnenen Informationen über das Drehverhalten der einzelnen Räder werden in bekannter Weise in einer Reglerlogik 1 bzw. in einem Datenverarbeitungssystem, das von programmgesteuerten Schaltkreisen, wie Microcomputern, und/oder von festverdrahteten elektronischen Schaltkreisen Gebrauch macht, ausgewertet. Das Verhalten des Fahrzeugs wird ebenfalls mit Hilfe der Sensorsignale bewertet; es wird beispielsweise eine Fahrzeugreferenzgeschwindigkeit ermittelt, die Bezugswerte zur Bemessung des Bremsdruckes in den Radbremsen der einzelnen geregelten Räder liefert.

Fig. 1 zeigt eine Schaltungsanordnung mit ausschließlich passiver Schwingungsdämpfung. Aus den Ausgangssignalen der Reglerlogik 1, also in Abhängigkeit von dem Drehverhalten der einzelnen Räder und auf Grundlage der in der Reglerlogik 1 installierten Regelalgorithmen, wird in einem Druckermittlungs-Schaltkreis 2 ein von der Schlupfregelung abhängiger Sollwert $P_{REG}$ für den Bremsdruck in den einzelnen Radbremsen gewonnen.

Es ist eine Druckhalteschaltung 11+12 vorhanden. Der Sollwert $P_{REG}$ wird, solange eine Schwingungsdämpfungslogik 4 nicht eingreift, über den geschlossenen Schalter 11 und über den Haltekreis 12 der Druckhalteschaltung an eine Ventilansteuerung 6 weitergegeben.

In einer Ventilansteuerung 6 befindet sich bei den in den Figuren 1 und 2 dargestellten Ausführungsbeispielen der Erfindung ein nachgeschalteter Regelkreis, mit dem aus dem Bremsdruck-Sollwert $P_{SOLL}$ die Signale zur Betätigung der Ventile 7 ermittelt werden.

In dieser Ventilansteuerung 6 wird der Solldruck $P_{SOLL}$ in einem Subtrahierer 8 mit einem Istdruck oder einem dem Istdruck angenäherten Wert $P_{MOD}$ verglichen. Aus der Differenz $\Delta P = P_{SOLL} - P_{MOD}$ werden dann in einer Ventiltreiberstufe 9 die Signale VS1 zur Ansteuerung der Ventile des zugehörigen geregelten Rades errechnet.

Der Istdruck oder ein dem Istdruck angenäherter Wert $P_{MOD}$ wird in den Ausführungsbeispielen der Erfindung, auf die sich die Fig. 1 und die anschließend erläuterte Fig. 2 beziehen, durch Bildung eines sogen. Raddruckmodells RDM in einem Schaltkreis 10 gebildet; bei einer Schaltungsanordnung auf Basis von programmgesteuerten Schaltungen wird dieses Raddruckmodell RDM durch entsprechende Programmierung gewonnen. Als Eingangsgrößen für das Raddruckmodell RDM werden vor allem die Ventilansteuersignale VS1 der dem jeweiligen Rad zugeordneten Hydraulikventile herangezogen, jedoch auch andere Signale, z.B. die Ansteuersignale für andere Hydraulikventile; dies symbolisiert die Signalleitung VS2.

Außerdem werden zur Bildung des Raddruckmodells RDM, das ohne direkte Druckmessung einen dem tatsächlichen Radbremsdruck angenäherten Wert liefern soll, noch andere Einflußgrößen berücksichtigt. Von Bedeutung sind außer den Ventilansteuerzeiten z.B. noch die Druckaufbau- und Druckabbaukennlinien der Radbremsen, die Charakteristik und die Einschaltzeiten der Hydraulikpumpe (HP), der Anfangsdruck beim Einsetzen der Regelung, der momentane Regelmodus - ABS, ASR oder FSR - usw.. Die zum Schaltkreis 10 weisenden Pfeile symbolisieren die Einflußgrößen.

Zur Dämpfung von Schwingungen im Antriebssystem, die zu Drehschwingungen der angetriebenen Räder in Umfangsrichtung führen, werden in der Zusatzschaltung 4 die Drehbewegungen der angetriebenen Räder ausgewertet. Der Zusatzschaltung 4 werden hierzu über die angedeuteten, von der Reglerlogik 1 zu der Logik 4 führenden Signalleitungen bereits aufbereitete Geschwindigkeitssignale $v_{a1}, v_{a2}$, die die Geschwindigkeit der angetriebenen Räder darstellen, zugeführt.

Für die in Fig.1 dargestellte passive Schwingungsdämpfung wird eine Information darüber benötigt, ob die Reglerlogik 1 gerade einen Druckaufbau oder einen Druckabbau anfordert.

Hat die Schwingungsdämpfungslogik 4 erkannt, daß der gegenwärtig von der Antriebsschlupfregelung angeforderte Druckaufbau oder Druckabbau verschoben werden soll, wird der Schalter 11 geöffnet. Die letzte vor dem Öffnen des Schalters 11 anliegende Druckanforderung wird konstant über das Halteglied 12 an die Druckregelungslogik 6 als Sollwert weitergegeben.

Fig. 2 bezieht sich auf ein Ausführungsbeispiel einer Schaltungsanordnung mit aktiver und passiver Dämpfung von Schwingungen im Antriebssystem. Hierzu sind zusätzlich zu der zuvor beschriebenen Schaltungsanordnung ein Schaltkreis 5, der auf Basis der Ausgangssignale der Zusatzschaltung bzw. Schwingungsdämpfungslogik 4 die Solldruck-Komponente $P_D$ ermittelt, und ein Addierer 3 erforderlich. In dem Addierer 3 wird zu dem Solldruck bzw. zu der ersten Solldruck-Komponente $P_{REG}$ eine zweite Solldruck-Komponente $P_D$ addiert.

Das Ausgangssignal des Addierers 3, das durch die Überlagerung bzw. die phasenrichtige Addition der beiden Solldruck-Komponenten $P_{REG}$ und $P_D$ entstand, wird wie in dem Beispiel nach Fig.1 der Ventilansteuerung 6 zugeführt, die schließlich die Signale zur Steuerung der einzelnen Hydraulikventile 7 der Bremsanlage, zu der die Schaltungsanordnungen nach Fig. 1 oder Fig. 2 gehören, und damit des Bremsdruckes in den einzelnen Radbremsen liefert.

Die Solldruck-Komponente $P_D$ ist folglich allein von den Drehschwingungen der angetriebenen Räder abhängig, während die eigentliche Blockierschutz- oder Antriebsschlupfregelung, die die Arbeitsweise der Reglerlogik 1 bestimmt, die Bremsdruckkomponente $P_{REG}$ festlegt. Der Solldruck $P_{SOLL}$ in den einzelnen Radbremsen ergibt sich durch Überlagerung der beiden Bremsdruck-Komponenten $P_{REG}$ und $P_D$.

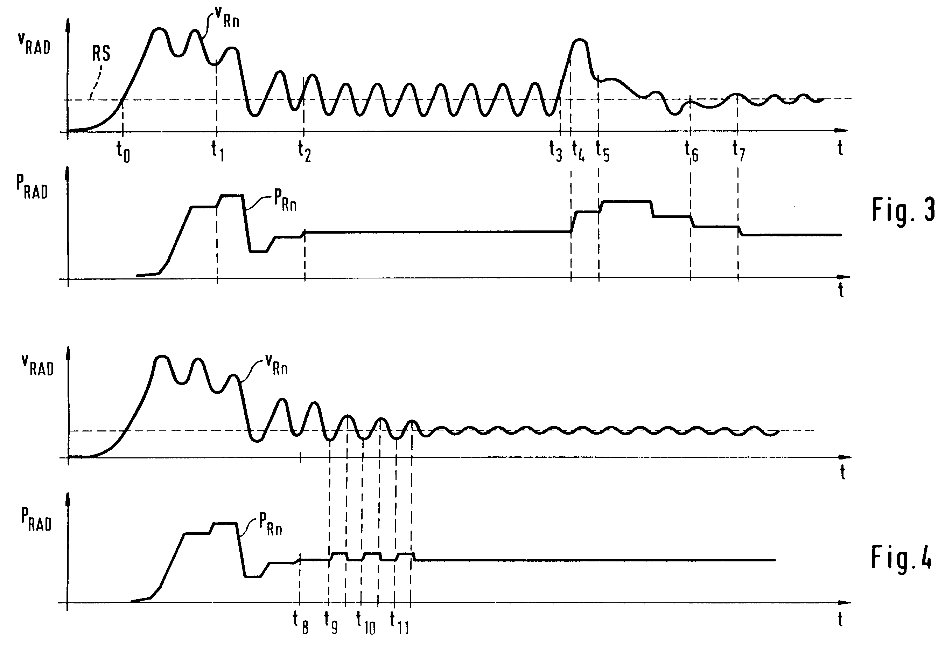

Die Wirkungsweise des erfindungsgemäßen Verfahrens und der erfindungsgemäßen Schaltungsanordnungen veranschaulichen die Diagramme gemäß den Fig. 3 und 4. Fig. 3 zeigt ein Beispiel einer "passiven" Schwingungsdämpfung im ASR-Regelmodus. Zum Zeitpunkt $t_0$ überschreitet die Geschwindigkeit $v_{Rn}$ das Rades n eines anfahrenden Fahrzeugs die gestrichelt angedeutete Antriebsschlupfregelschwelle RS. Folglich wird, wie der Druckverlauf $P_{RAD}$ in Fig. 3 zeigt, Bremsdruck $P_{Rn}$ in die Radbremse des betreffenden Rades eingesteuert. Mit Hilfe des Bremsdruckes wird in bekannter Weise der Radschlupf - es handelt sich hier um positiven Schlupf bzw. Antriebsschlupf - so weit reduziert, daß sich ab $t_2$ bis zum Zeitpunkt $t_4$ eine Phase konstanten Bremsdruckes anschließt. Zum Zeitpunkt $t_3$ steigt der Antriebsschlupf erneut über einen Grenzwert an, was eine erneute Erhöhung des Radbremsdruckes in zwei Stufen (zu den Zeitpunkten $t_4$ und $t_5$ und eine anschließende Druckreduzierung (zu den Zeitpunkten $t_6$ und $t_7$) bis zu dem Druck-Konstantwert zur Folge hat.

Aus Fig. 3 ist zu erkennen, daß der von der Schlupfregelung beeinflußten Radgeschwindigkeit $v_{Rn}$ eine Radschwingung mit relativ hoher Frequenz überlagert ist. Bei einer passiven Schwingungsdämpfung, auf die sich Fig. 3 bezieht, haben während der Druck-Konstanthaltephase, die zum Zeitpunkt $t_2$ beginnt, die Drehschwingungen keinerlei Auswirkungen auf den Druckverlauf in der Radbremse. Erst zum Zeitpunkt $t_3$, wenn die schlupfabhängige Regelung Bremsdruckerhöhung verlangt, wird das Einsetzen dieser Bremsdruckerhöhung in Abhängigkeit von der Phasenlage der Drehschwingungen beeinflußt. Im dargestellten Beispiel setzt die Druckerhöhung (zum Zeitpunkt $t_4$) erst dann ein, wenn die nächste ansteigende Halbwelle der Drehschwingung auftritt. Dies ist noch deutlicher zum Zeitpunkt $t_5$ zu erkennen. Der Druckabbau wird in entsprechender Weise durch die erfindungsgemäße Schwingungsdämpfung bis zum Beginn der nächsten fallenden Halbwelle der Drehschwingung, hier bis zu den Zeitpunkten $t_6$ und $t_7$, verzögert. Auf diese weise wird eine Dämpfung der Drehschwingung, wie sich aus dem Verlauf der Radgeschwindigkeit $v_{Rn}$ nach dem Zeitpunkt $t_6$ erkennen läßt, erreicht.

Bei einer "aktiven" Schwingungsdämpfung gemäß Fig. 4 wird auch in der eigentlichen Druckkonstanthaltephase während einer Antriebsschlupfregelung eine Dämpfung der Schwingungen erzielt. Die durch die eigentliche Schlupfregelung ausgelöste Konstanthaltephase des Bremsdruckes beginnt im Beispiel nach Fig. 4 zum Zeitpunkt $t_8$, da nach dem gemittelten (gefilterten) Schlupf geregelt wird. Die von der Zusatzschaltung 4 ermittelten Drehschwingungen lösen jedoch bereits in dieser Phase, in der die von der Schlupfregelung abhängige Bremsdruckkomponente konstant ist, eine Bremsdruckmodulation aus. Diese führt zu den Zeitpunkten $t_9, t_{10}, t_{11}$ zu Bremsdruckerhöhungen, die jeweils am Beginn einer steigenden Halbwelle der Drehschwingungen einsetzen und an die sich zu Beginn der fallenden Halbwelle der Drehschwingungen jeweils ein entsprechender Bremsdruckabbau anschließt. Dies führt auch in der eigentlichen Bremsdruckhaltephase, wenn man nur den von der Schlupfregelung abhängigen Bremsdruck betrachtet, zu einer wirkungsvollen Dämpfung der Drehschwingungen. Dies zeigt der Radgeschwindigkeitsverlauf $v_{Rn}$ in Fig. 4.

Bei der beschriebenen "passiven" Schwingungsdämpfung wird also durch die zeitliche Verteilung der durch die Schlupfregelung errechneten Druckaufbau- und Druckabbaupulse den Drehschwingungen mit gegenphasigen Bremsmomentänderungen entgegengewirkt. Dies heißt, daß immer dann, wenn von der Schlupfregelung ein Druckaufbaupuls gegeben werden soll, dieser an den Anfang der nächsten steigenden Kalbwelle der Drehschwingung geschoben wird. Bei einem Abbaupuls erfolgt die Verschiebung entsprechend bis zum Anfang der nächsten fallenden Halbwelle. Durch diese passive Methode wird jedoch nur dann eine Schwingungsdämpfung erreicht, wenn die Schlupfregelung Änderungen des Radbremsdruckes auslöst. Findet während längerer Konstanthaltephasen keine Druckänderung statt, weil z.B. die Abweichung des Radschlupfes von seinem durch die Regelschwelle vorgegebenen Sollwert klein ist, kann sich - siehe Fig. 3 - eine Drehschwingung aufbauen, ohne daß diese durch eine Druckmodulation gedämpft wird.

Bei der "aktiven" Schwingungsdämpfung wird dagegen unabhängig von der durch die Schlupfregelung ausgelösten Bremsdruckmodulation am Anfang der steigenden Halbwelle einer Drehschwingung, falls diese eine vorgegebene Intensität bzw. einen Grenzwert übersteigt, ein Druckaufbau einer bestimmten, von dem Schaltkreis 5 in Fig. 1 oder 2 errechneten Größe $P_D$ gegeben, um das Rad im Hochlaufen abzubremsen und dadurch die Drehschwingung zu dämpfen. Umgekehrt wird am Anfang der fallenden Halbwelle ein Druckabbau um den gleichen Betrag durchgeführt, der das Rad gegenphasig zur Drehschwingung wiederbeschleunigt und damit ebenfalls schwingungsdämpfend wirkt.

Zweckmäßigerweise werden beide Maßnahmen, nämlich die passive und die aktive Schwingungsdämpfung, miteinander kombiniert, wodurch es gelingt, die Drehschwingungen während einer Schlupfregelung so stark zu bedämpfen, daß sie nicht mehr oder nur noch gering wahrgenommen werden.

## Patentansprüche

1. Verfahren zur Dämpfung von Schwingungen im Antriebssystem eines mit einer Schlupfregelung, insbesondere einer Blockierschutz-, Antriebsschlupf- und/oder Fahrstabilitätsregelung, ausgerüsteten Fahrzeugs, bei dem das Drehverhalten der einzelnen Räder ermittelt und ausgewertet wird und bei dem Mittel zum Erkennen und Dämpfen von Rad- und Achsschwingungen vorgesehen sind, dadurch **gekennzeichnet**, daß die Schwingungen im Antriebssystem durch Auswertung des Drehverhaltens und der Drehschwingungen der einzelnen Räder in Umfangsrichtung ermittelt werden sowie daß diese Schwingungen aktiv, insbesondere während einer Druckkonstanthaltephase, durch Einsteuern von Bremsdruck unabhängig von einer Bremsdruckmodulation durch die Schlupfregelung, und passiv, durch Modulation des zur Schlupfregelung in die Radbremsen der einzelnen Räder eingesteuerten Bremsdruckes, in Abhängigkeit von der Amplitude und der Phasenlage der Drehschwingungen gedämpft werden.

2. Verfahren nach Anspruch 1, dadurch **gekennzeichnet**, daß zur passiven Schwingungsdämpfung das Einsetzen einer von der Schlupfregelung abhängigen Druckeinsteuerung in die Radbremsen des jeweiligen Rades bis zum Beginn der nächsten ansteigenden, zunehmender Drehgeschwindigkeit entsprechenden Halbwelle der Drehschwingung des jeweiligen Rades verzögert wird.

3. Verfahren nach Anspruch 1 oder 2, dadurch **gekennzeichnet**, daß das Einsetzen eines von der Schlupfregelung abhängigen Druckabbaus bis zum Beginn der nächsten fallenden Halbwelle der Drehschwingung verzögert wird.

4. Verfahren nach Anspruch 2 oder 3, für ein Regelungssystem, bei dem der Bremsdruck in den Radbremsen durch Druckaufbau- und Druckabbaupulse gesteuert wird, dadurch **gekennzeichnet**, daß zur Schwingungsdämpfung der Beginn der Bremsdruckaufbaupulse bis zum Beginn der nächsten ansteigenden Halbwelle und/oder der Beginn der Bremsdruckabbaupulse bis zum Beginn der nächsten fallenden Halbwelle verzögert werden.

5. Verfahren nach einem oder mehreren der Ansprüche 1 - 4, dadurch **gekennzeichnet**, daß zur aktiven Schwingungsdämpfung am Anfang einer steigenden Halbwelle der Drehschwingungen Bremsdruck in die Radbremse des jeweiligen Rades einsteuert und/oder am Anfang einer fallenden Halbwelle Bremsdruck abgebaut wird.

6. Verfahren nach Anspruch 5, dadurch **gekennzeichnet**, daß in den aufeinanderfolgenden steigenden und fallenden Halbwellen der Drehschwingungen der Bremsdruck jeweils um den annähernd gleichen Betrag erhöht und wieder abgesenkt wird.

7.  Schaltungsanordnung zur Durchführung des Verfahrens nach einem oder mehreren der Ansprüche 1 - 6, für eine Bremsanlage mit elektronischer Regelung, mit Radsensoren zur Ermittlung des Drehverhaltens der einzelnen Räder und mit einer elektronischen Schaltung zur Auswertung der Sensorsignale und zur Erzeugung von Bremsdruck-Steuersignalen, die elektrisch betätigbaren Hydraulikventilen zugeführt werden und mit denen der Bremsdruck in den Radbremsen in Abhängigkeit von dem Raddrehverhalten zur Regelung des Schlupfes gesteuert wird, dadurch **gekennzeichnet**, daß Schaltkreise (1, 2), die eine von der Schlupfregelung abhängige, erste Solldruck-Komponente ($P_{REG}$) ermitteln, und Zusatzschaltungen (4,5), die ein von den Drehschwingungen abhängiges, zur passiven und/oder aktiven Dämpfung der Drehschwingungen auswertbares Druckhaltesignal oder ein eine zweite Solldruck-Komponente($P_D$) darstellendes Signal liefern, vorhanden sind sowie daß ein Addierer (3) die beiden Solldruck-Komponenten ($P_{REG}$,$P_D$) überlagert, einen Sollwert ($P_{SOLL}$) des Bremsdruckes bildet und einer Ventilansteuerung (6) zuführt, die die Signale (VS1,VS2) zur Ansteuerung der Hydraulikventile (7) liefert.

8.  Schaltungsanordnung nach Anspruch 7, dadurch **gekennzeichnet**, daß diese zur passiven Dämpfung der Drehschwingungen dient und als Zusatzschaltung eine Schwingungsdämpfungslogik (4) enthält und daß anstelle des Addierers eine aus einem Schalter (11) und einem Haltekreis (12) bestehende Druckhalteschaltung (11+12) vorgesehen ist, die durch das Ausgangssignal der Schwingungsdämpfungslogik (4) ansteuerbar ist und in Abhängigkeit von dem Ausgangssignal der Schwingungsdämpfungslogik (4) die aktuelle erste Solldruckkomponente ($P_{REG}$) oder die zuletzt ermittelte erste Solldruckkomponente zu der Ventilansteuerung (6) weiterleitet.

9.  Schaltungsanordnung nach Anspruch 7 oder 8, dadurch **gekennzeichnet**, daß die Ventilansteuerung (8) einen untergeordneten Regelkreis enthält, der den Sollwert ($P_{SOLL}$) des Bremsdruckes mit dem Istwert des Bremsdruckes oder mit einem dem Istwert angenäherten Druck ($P_{MOD}$) vergleicht, die Differenz ($\Delta P$) zwischen dem Sollwert ($P_{SOLL}$)und dem Istwert bzw. dem Istwert angenäherten Druck ($P_{MOD}$) bestimmt und die Signale (VS1,VS2) zur AnSteuerung der Hydraulikventile (7) in Abhängigkeit von der Differenz ($\Delta P$) zwischen dem Soll- und dem Istwert erzeugt.

10. Schaltungsanordnung nach Anspruch 9, dadurch **gekennzeichnet**, daß der dem Istwert des Bremsdruckes in den einzelnen Radbremsen angenäherte Druck ($P_{MOD}$)durch Bildung eines Raddruckmodells (RDM) ermittelt wird.

## Claims

1.  Method of dampening vibrations in the drive system of a vehicle equipped with a slip control system, more particularly, an anti-lock control system, traction slip control system and/or driving stability control system, wherein the rotational behavior of the individual wheels is sensed and analyzed, and wherein a means is provided for detecting and dampening wheel and axle vibrations, **characterized** in that the vibrations in the drive system are determined by evaluation of the rotational behavior and the torsional vibrations of the individual wheels in a circumferential direction, and in that the vibrations are dampened actively, in particular during a pressure hold-constant phase, by the introduction of braking pressure irrespective of braking pressure modulation by the slip control, and are dampened passively by modulation of the braking pressure, which is introduced into the wheel brakes of the individual wheels for slip control, as a function of the amplitude and the phase positioning of the torsional vibrations.

2.  Method as claimed in claim 1, **characterized** in that for passive vibration dampening, the commencement of pressure introduction into the wheel brakes of the respective wheel, which is responsive to slip control, is delayed until the commencement of the next leading half wave of the torsional vibration of the respective wheel, which leading half wave corresponds to increasing rotational speed.

3.  Method as claimed in claim 1 or claim 2, **characterized** in that the start of pressure reduction, responsive to slip control, is delayed until the commencement of the next trailing half wave of the torsional vibration.

4.  Method as claimed in claim 2 or claim 3, for a control system wherein the braking pressure in the wheel brakes is controlled by pressure-increase and pressure-reduction pulses, **characterized** in that the start of the braking pressure-increase pulses is postponed until the commencement of the next leading half wave and/or the start of the braking pressure-reduction pulses is postponed until the commencement of th next trailing half wave for vibration dampening purposes.

5.  Method as claimed in any one or more of claims 1 to 4, **characterized** in that for the active vibration dampening, braking pressure is introduced into the wheel brake of the respective wheel at the beginning of a leading half wave of the torsional vibrations, and/or braking pressure is reduced at the beginning of a trailing half wave.

6. Method as claimed in claim 5,
   **characterized** in that in the successive leading and trailing half waves of the torsional vibrations, the braking pressure is respectively increased and reduced again by approximately the same amount.

7. Circuitry for implementing the method as claimed in any one or more of claims 1 to 6, for a brake system including electronic control, wheel sensors for determining the rotational behavior of the individual wheels, and an electronic circuit for evaluating the sensor signals and for generating braking pressure control signals which are sent to electrically operable hydraulic valves and are used to control the braking pressure in the wheel brakes as a function of the wheel rotational behavior,
   **characterized** in that there is provision of circuits (1, 2) which determine a first nominal pressure component ($P_{REG}$) responsive to slip control, and additional circuits (4, 5) which furnish a pressure hold-constant signal, that is responsive to the torsional vibrations and can be evaluated for passive or active dampening of the torsional vibrations, or a signal representative of a second nominal pressure component ($P_D$), and in that an adder (3) superposes the two nominal pressure components ($P_{REG}$, $P_D$), produces a nominal value ($P_{SOLL}$) of the braking pressure and sends it to a valve actuation control (6) which provides the signals (VS1, VS2) for actuating the hydraulic valves (7).

8. Circuitry as claimed in claim 7,
   **characterized** in that the circuitry is used for the passive dampening of the torsional vibrations and includes a vibration dampening logic circuit (4) as an additional circuit, and in that instead of an adder, there is provided a pressure hold-constant circuit (11+12), comprising a switch (11) and a holding circuit (12), which is actuatable by the output signal of the vibration dampening logic circuit (4) and relays the current first nominal pressure component ($P_{REG}$) and the first nominal pressure component determined the last to the valve actuation control (6) in response to the output signal of the vibration dampening logic circuit (4).

9. Circuitry as claimed in claim 7 or 8,
   **characterized** in that the valve actuation control (8) includes a subordinate control loop which compares the nominal value ($P_{SOLL}$) of the braking pressure with the actual value of the braking pressure, or with a pressure ($P_{MOD}$) approximated to the actual value, which determines the difference ($\Delta P$) between the nominal value ($P_{SOLL}$) and the actual value or a pressure ($P_{MOD}$) approximated to the actual value, and generates the signals (VS1, VS2) for the actuation of the hydraulic valves (7) as a function of the difference ($\Delta P$) between the nominal value and the actual value.

10. Circuitry as claimed in claim 9,
    **characterized** in that the pressure ($P_{MOD}$) approximated to the actual value of the braking pressure in the individual wheel brakes is defined by producing a wheel pressure pattern (RDM).

**Revendications**

1. Procédé d'amortissement d'oscillations dans le système de traction d'un véhicule pourvu d'une régulation de glissement, notamment d'une régulation antiblocage, régulation de glissement de traction et/ou régulation de stabilité de conduite, selon lequel le comportement des différentes roues en rotation est relevé et analysé et selon lequel des moyens sont prévus pour constater et amortir des oscillations de roue et oscillations d'essieu, caractérisé en ce que les oscillations dans le système d'entraînement sont déterminées au moyen d'une analyse du comportement en rotation et des oscillations de rotation des différentes roues suivant la direction circonférentielle et en ce que ces oscillations sont amorties d'une manière active, notamment pendant une phase de maintien de pression constante, par un réglage commandé de la pression de frein, indépendamment d'une modulation de pression de frein, au moyen de la régulation de glissement, et d'une manière passive au moyen d'une modulation de la pression de frein réglée d'une manière commandée en vue de la régulation de glissement dans les freins des différentes roues, en fonction de l'amplitude et de la position de phase des oscillations de rotation.

2. Procédé suivant la revendication 1, caractérisé en ce qu'en vue de l'amortissement passif des oscillations, la réalisation d'un réglage commandé de pression, dépendant de la régulation de glissement, dans les freins des différentes roues est retardée, pour chacune, jusqu'au début de la demionde montante suivante, correspondant à une vitesse de rotation croissante, de l'oscillation de rotation de la roue considérée.

3. Procédé suivant la revendication 2, caractérisé en ce que l'utilisation d'une suppression de pression dépendant de la régulation de glissement est retardée jusqu'au début de la demi-onde descendante suivante de l'oscillation de rotation.

**4.** Procédé suivant la revendication 2 ou 3, pour un système de régulation dans lequel la pression dans les freins de roue est commandée au moyen d'impulsions d'établissement de pression et d'impulsions de suppression de pression, caractérisé en ce qu'en vue de l'amortissement des oscillations, le début des impulsions d'établissement de pression de frein est retardé jusqu'au début de la demi-onde montante suivante et/ou le début des impulsions de suppression de pression de frein jusqu'au début de la demi-onde descendante suivante.

**5.** Procédé suivant une ou plusieurs des revendications 1-4, caractérisé en ce qu'en vue de l'amortissement actif des oscillations, la pression dans le frein de chaque roue considérée est réglée d'une manière commandée au début d'une demi-onde montante des oscillations de rotation et/ou supprimée au début d'une demi-onde descendante.

**6.** Procédé suivant la revendication 5, caractérisé en ce que, dans les demi-ondes montantes et descendantes successives des oscillations de rotation, la pression de frein est chaque fois augmentée et de nouveau abaissée de la même valeur approximativement égale.

**7.** Agencement de circuit pour la mise en oeuvre du procédé suivant une ou plusieurs des revendications 1-6, pour un système de freinage à régulation électronique, comprenant des capteurs de roue, servant à déterminer le comportement en rotation des différentes roues, et un circuit électronique servant à analyser les signaux de capteur et à produire des signaux de commande de pression de frein, qui sont envoyés à des valves hydrauliques à commande électrique et au moyen desquels la pression dans les freins de roue est commandée en fonction du comportement en rotation des roues en vue de la régulation du glissement, caractérisé en ce qu'il est prévu des circuits de commutation (1, 2), qui déterminent une première composante de pression de consigne ($P_{REG}$) dépendant de la régulation, et des circuits supplémentaires (4, 5) qui fournissent un signal de maintien de pression, dépendant des oscillations de rotation et analysable en vue de l'amortissement passif et/ou actif des oscillations de rotation, ou un signal représentant une seconde composante de pression de consigne ($P_D$), et en ce qu'un sommateur (3) superpose les deux composantes de pression de consigne ($P_{REG}$, $P_D$), forme une valeur de consigne ($P_{SOLL}$) de la pression de frein et l'envoie à une commande de valve (6) qui fournit les signaux (VS1, VS2) en vue de la commande des valves hydrauliques (7).

**8.** Agencement de circuit suivant la revendication 7, caractérisé en ce que celui-ci sert à l'amortissement passif des oscillations de rotation et contient, en tant que circuit supplémentaire, une logique d'amortissement des oscillations (4) et en ce qu'à la place du sommateur, il est prévu un circuit de maintien de pression (11 + 12), constitué d'un interrupteur (11) et d'un circuit de maintien (12), qui peut être commandé au moyen du signal de sortie de la logique d'amortissement d'oscillations (4) et qui, en fonction du signal de sortie de la logique d'amortissement d'oscillations (4), transmet à la commande de valve (6) la première composante de pression de consigne ($P_{REG}$) actuelle ou la première composante de pression de consigne déterminée en dernier lieu.

**9.** Agencement de circuit suivant la revendication 7 ou 8, caractérisé en ce que la commande de valve (8) contient un circuit de régulation, hiérarchiquement subordonné, qui compare la valeur de consigne ($P_{SOLL}$) de la pression de frein à la valeur réelle de la pression de frein ou à une pression ($P_{MOD}$) constituant une valeur approchée de la valeur réelle, détermine la différence ($\Delta P$) entre la valeur de consigne ($P_{SOLL}$) et la valeur réelle ou la pression ($P_{MOD}$) constituant une valeur approchée de la valeur réelle et produit les signaux (VS1, VS2) servant à commander les valves hydrauliques (7) en fonction de la différence ($\Delta P$) entre la valeur de consigne et la valeur réelle.

**10.** Agencement de circuit suivant la revendication 9, caractérisé en ce que la pression ($P_{MOD}$) constituant une valeur approchée de la valeur réelle de la pression dans les différents freins de roue est déterminée au moyen de la formation d'un modèle de pression (RDM).

Fig. 1

Fig. 2

EP 0 817 735 B1

Fig. 3

Fig. 4

EP 0 817 735 B1